# EUROPÄISCHE PATENTSCHRIFT

(11) **EP 3 572 624 B1**
(45) Veröffentlichungstag und Bekanntmachung des Hinweises auf die Patenterteilung: **30.08.2023**
(21) Anmeldenummer: 19175641.0
(22) Anmeldetag: 21.05.2019
(51) Int. Cl.: F01D 5/34, F01D 5/30, F01D 9/04, F04D 29/66

(54) **TURBOMASCHINENBAUGRUPPE**
TURBO MACHINE ASSEMBLY
MODULE DE TURBOMACHINE

(30) Priorität: 24.05.2018 DE 102018208229
(43) Veröffentlichungstag der Anmeldung: 27.11.2019
(73) Patentinhaber: MTU Aero Engines AG, 80995 München (DE)
(72) Erfinder: Hartung, Andreas, 81829 München (DE)

(56) Entgegenhaltungen:
- EP-A1- 2 806 105
- EP-A1- 2 977 553
- EP-A1- 3 181 824
- EP-A1- 3 231 998
- EP-A2- 2 159 379
- WO-A1-2008/041889
- JP-A- 2004 100 553
- JP-A- 2006 144 575

## Beschreibung

Die vorliegende Erfindung betrifft eine Turbomaschinenbaugruppe, eine Turbomaschine insbesondere Gasturbine, insbesondere Flugtriebwerk-Gasturbine, mit der Turbomaschinenbaugruppe sowie ein Verfahren zum Herstellen der Turbomaschinenbaugruppe.

Aus der WO 2012/038406 A1 ist eine Schaufelanordnung bekannt, bei der zwischen allen Paaren unmittelbar benachbarter Schaufeln jeweils ein Dämpfungselement angeordnet ist, wobei zum Verstimmen der Eigenfrequenzen der Schaufeln mindestens zwei Schaufelpaare unterschiedliche Dämpfungselemente aufweisen.

Weitere Schaufelanordnungen sind aus den Dokumenten JP 2006144575A, EP2159379A2, EP3181824A1, WO2008041889A1, JP2004100553A, EP2977553A1, EP2806105A1 und EP3231998A1 bekannt.

Eine Aufgabe einer Ausführung der vorliegenden Erfindung ist es, den Betrieb einer Turbomaschine zu verbessern.

Diese Aufgabe wird durch eine Turbomaschinenbaugruppe mit den Merkmalen des Anspruchs 1 gelöst. Ansprüche 5-7 stellen eine Turbomaschine mit bzw. ein Verfahren zum Herstellen (wenigstens) einer hier beschriebenen Turbomaschinenbaugruppe unter Schutz. Vorteilhafte Ausführungsformen der Erfindung sind Gegenstand der Unteransprüche.

Nach einer Ausführung der vorliegenden Erfindung weist eine Turbomaschinenbaugruppe ein ringartiges Strömungsgitter mit mehreren Schaufeln auf, die in einer Umfangsrichtung verteilt angeordnet sind.

In einer Ausführung sind die Schaufeln Laufschaufeln, die im Betrieb um eine (Haupt)Maschinen- bzw. Drehachse der Turbomaschine rotieren bzw. hierzu vorgesehen bzw. verwendet, insbesondere eingerichtet, in einer Ausführung mit einem Rotor der Turbomaschine verbunden, sind bzw. werden. Aufgrund der Rotationen ist eine Verstimmung der Eigenfrequenzen von Laufschaufeln eine besonders vorteilhafte Anwendung der vorliegenden Erfindung.

In einer anderen Ausführung sind die Schaufeln stationäre bzw. mit einem Gehäuse verbundene bzw. hierzu vorgesehene bzw. verwendete, insbesondere eingerichtete, Leitschaufeln. Aufgrund von Gehäusevibrationen und/oder der Anströmung ist eine Verstimmung der Eigenfrequenzen von Leitschaufeln eine besonders vorteilhafte Anwendung der vorliegenden Erfindung.

In einer Ausführung sind zwei oder mehr, insbesondere alle, Schaufeln miteinander und/oder einer gemeinsamen Ringscheibe integral ausgebildet oder stoffschlüssig verbunden. Das Schaufelgitter kann somit in einer Ausführung als sogenannte Blisk oder in Form von aufeinanderfolgenden sogenannten Schaufelclustern mit je zwei oder mehr miteinander integral ausgebildeten oder stoffschlüssig verbundenen Schaufeln ausgebildet sein.

In einer Ausführung sind die Schaufeln einzeln oder gruppenweise, insbesondere also als separate Schaufeln oder in Form von aufeinanderfolgenden sogenannten Schaufelclustern mit je zwei oder mehr miteinander integral ausgebildeten oder stoffschlüssig verbundenen Schaufeln, zerstörungsfrei lösbar an einer gemeinsamen Ringscheibe befestigt.

Nach einer Ausführung der vorliegenden Erfindung weist die Turbomaschinenbaugruppe eine ein- oder mehrteilige Verstimmeinrichtung auf, durch die bzw. mithilfe der Eigenfrequenzen, nämlich die gleichen Biege- und/oder Torsionseigenfrequenzen, der Schaufeln unterschiedlich verstimmt bzw. -schoben werden bzw. die hierzu vorgesehen, insbesondere eingerichtet, ist bzw. verwendet wird. Durch die unterschiedliche Verstimmung bzw. die hierdurch bewirkten voneinander verschiedenen Eigenfrequenzen können in einer Ausführung Resonanzen und/oder Bauteilbelastungen reduziert werden.

Gemäß der vorliegenden Erfindung weist die Verstimmeinrichtung alle an den Schaufeln beweglich angeordneten Verstimmelemente, die in Umfangsrichtung in einer Reihe aufeinanderfolgen, auf und ist derart ausgebildet, dass Schaufeln des Strömungsgitters, die vorliegend ohne Beschränkung der Allgemeinheit analog ebenfalls als erste Schaufeln bezeichnet werden, im Betrieb jeweils höchstens ein, insbesondere kein, bewegliches Verstimmelement dieser Verstimmeinrichtung kontaktieren, in einer Ausführung also frei von beweglichen Verstimmelementen dieser Verstimmeinrichtung sind. Mit anderen Worten werden in einer Ausführung ausgewählte Schaufeln des Schaufelgitters gezielt nicht oder nur einseitig bzw. mit einem Verstimmelement bestückt.

Dem liegt die Idee zugrunde, statt wie in der WO 2012/038406 A1 an allen Schaufeln jeweils beidseitig je ein bewegliches Verstimmelement mit derselben Grundfunktionalität und gegebenenfalls unterschiedlicher Bauform anzuordnen, gezielt bzw. planmäßig bei der Verteilung solcher beweglichen Verstimmelemente eine oder mehrere (erste) Schaufeln ein- oder beidseitig auszulassen bzw. -sparen.

Hierdurch können in einer Ausführung gegenüber der WO 2012/038406 A1 die Schaufeln stärker gegeneinander verstimmt werden. Eine solche Verstimmeinrichtung mit in Umfangsrichtung in einer Reihe aufeinanderfolgenden beweglichen Verstimmelementen, die gezielt bzw. planmäßig an ersten Schaufeln nicht bzw. nicht doppelt bzw. beidseitig angeordnet werden bzw. sind, ist insbesondere zur Verstimmung von einzelnen Schaufeln vorteilhaft, ohne jedoch hierauf beschränkt zu sein, sie kann insbesondere auch bei Blisks, aber auch Clustern vorteilhaft verwendet werden.

Erfindungsgemäß ist/wird zwischen wenigstens zwei aufeinanderfolgenden dieser ersten Schaufeln wenigstens eine andere Schaufeln des Schaufelgitters angeordnet.

In einer Ausführung ist/wird bzw. sind/werden zwischen wenigstens zwei aufeinanderfolgenden dieser ersten Schaufeln höchstens zwei, insbesondere wenigstens zwei und/oder höchstens eine, andere Schaufeln des Schaufelgitters angeordnet. So kann in einer Weiterbildung unter höchstens jeder in Umfangsrichtung gezählt dritten Schaufel jeweils ein- oder beidseitig ein bewegliches Verstimmelement angeordnet werden bzw. sein. Dann ist in einer Ausführung unter je wenigstens einer der beiden diesen dritten Schaufeln benachbarten Schaufeln keines der beweglichen Verstimmelemente der Verstimmeinrichtung angeordnet.

Gemäß der Erfindung ist die Verstimmeinrichtung, die alle an den Schaufeln beweglich angeordnete Verstimmelemente, die in Umfangsrichtung in einer Reihe aufeinanderfolgen, aufweist, derart ausgebildet, dass an einer Schaufel des Strömungsgitters, die vorliegend ohne Beschränkung der Allgemeinheit analog ebenfalls als zweite Schaufel bezeichnet wird, wenigstens zwei der beweglichen Verstimmelemente angeordnet sind.

Es hat sich überraschend herausgestellt, dass durch diese Unter- bzw. Obergrenzen jeweils, insbesondere in Kombination, besonders vorteilhafte Verstimmungen realisiert werden können.

Wie vorstehend erläutert, werden zur kompakteren Darstellung Schaufeln, an denen je höchstens ein bewegliches Verstimmelement der diese aufweisenden Verstimmeinrichtung angeordnet ist, Schaufeln, unter denen ein umlaufender Ring einer diesen aufweisenden Verstimmeinrichtung eine (größere) radiale Vertiefung aufweist, sowie Schaufeln, mit denen der umlaufende Ring der diesen aufweisenden Verstimmeinrichtung eine weitere Passung bzw. kleinere Kontaktfläche aufweist, jeweils als erste Schaufeln (der jeweiligen Ausführung) bezeichnet, Schaufeln, an denen je wenigstens zwei bewegliche Verstimmelemente der diese aufweisenden Verstimmeinrichtung angeordnet sind, Schaufeln, unter denen der umlaufende Ring der diesen aufweisenden Verstimmeinrichtung keine oder kleinere radiale Vertiefung aufweist, sowie Schaufeln, mit denen der umlaufende Ring der diesen aufweisenden Verstimmeinrichtung eine engere Passung bzw. größere Kontaktfläche aufweist, jeweils als zweite Schaufeln (der jeweiligen Ausführung).

In einer Ausführung wird bzw. ist die Verstimmeinrichtung radial innen an dem Strömungsgitter angeordnet, in einer Weiterbildung unter einem radial inneren Deckband bzw. einer radial inneren Plattform. In einer Ausführung sind bzw. werden die beweglichen Verstimmelemente der Verstimmeinrichtung in Kavitäten von Plattformen, insbesondere benachbarter, Schaufeln angeordnet.

Es hat sich überraschend herausgestellt, dass hierdurch besonders vorteilhafte Verstimmungen realisiert werden können.

Die Erfindung wird aufgrund der Strömungs- und Schwingungsverhältnisse mit besonderem Vorteil in Verdichter(stufe)n oder Turbinen(stufen) von Gasturbinen, insbesondere Flugtriebwerk-Gasturbinen verwendet.

Nach einer Ausführung der vorliegenden Erfindung werden zum bzw. beim Herstellen einer hier beschriebenen Turbomaschinenbaugruppe Eigenfrequenzen der Schaufeln durch die Verstimmeinrichtung unterschiedlich verstimmt und hierzu die beweglichen Verstimmelemente in Umfangsrichtung unter wenigstens teilweiser Auslassung der ersten Schaufeln so verteilt, dass die ersten Schaufeln des Strömungsgitters im Betrieb jeweils höchstens ein, insbesondere kein, bewegliches Verstimmelement der Verstimmeinrichtung kontaktieren.

Eine Axialrichtung ist in einer Ausführung parallel zu einer (Haupt)Maschinen- bzw. Drehachse der Turbomaschine, eine Umfangsrichtung eine Umlauf- bzw. Rotationsrichtung um diese Achse, eine Radialrichtung senkrecht zu Axial- und Umfangsrichtung.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Turbomaschinenbaugruppe nach einer Ausführung der vorliegenden Erfindung in einem Meridianschnitt;
- Fig. 2: einen Teil einer Turbomaschinenbaugruppe nach einer weiteren Ausführung der vorliegenden Offenbarung in einer axialen Draufsicht; und
- Fig. 3: einen Teil einer Turbomaschinenbaugruppe nach einer weiteren Ausführung der vorliegenden Offenbarung in einer axialen Draufsicht.

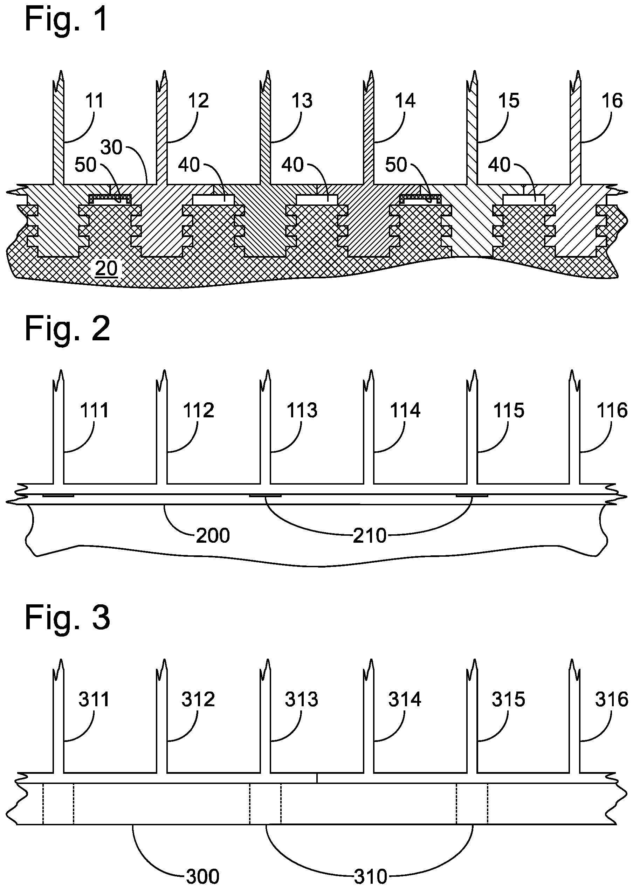

Fig. 1 zeigt einen Teil einer Turbomaschinenbaugruppe nach einer Ausführung der vorliegenden Erfindung in einem Meridianschnitt.

Die Turbomaschinenbaugruppe weist ein in Fig. 1 nur teilweise gezeigtes ringartiges Strömungsgitter mit mehreren einzelnen Schaufeln 11-16 auf, die in einer Umfangsrichtung (horizontal in Fig. 1) verteilt angeordnet und lösbar in einer gemeinsamen Ringscheibe 20 befestigt sind.

Eine Verstimmeinrichtung der Turbomaschinenbaugruppe weist alle an den Schaufeln beweglich angeordneten Verstimmelemente 50, die in Umfangsrichtung in einer Reihe aufeinanderfolgen und in Kavitäten 40 unter Plattformen 30 der Schaufeln angeordnet sind, auf und ist derart ausgebildet, dass die Schaufeln 11, 12, 14 und 15 im Betrieb jeweils eines der beweglichen Verstimmelemente 50 der Verstimmeinrichtung kontaktieren können, die Schaufeln 13, 16 hingegen keines der beweglichen Verstimmelement. Entsprechend stellen in einer Ausführung die Schaufeln 11-16, in einer anderen Ausführung nur die Schaufeln 13, 16 erste Schaufeln im Sinne der vorliegenden Erfindung dar.

Fig. 2 zeigt einen Teil einer Turbomaschinenbaugruppe nach einer weiteren Ausführung der vorliegenden Offenbarung in einer axialen Draufsicht.

Bei dieser Ausführung ist das Schaufelgitter mit den Schaufeln 111-116 als Blisk ausgebildet, an der radial innen (wie in Fig. 1 unten) eine Verstimmeinrichtung in Form eines umlaufenden Ringes 200 angeordnet ist.

Dieser weist unter ersten Schaufeln 111, 113, 115 des Strömungsgitters eine radiale Vertiefung 210 (in Fig. 2 übertrieben dargestellt) und unter zweiten Schaufeln 112, 114, 116 des Strömungsgitters keine radiale Vertiefung auf.

Fig. 3 zeigt einen Teil einer Turbomaschinenbaugruppe nach einer weiteren Ausführung der vorliegenden Offenbarung in einer axialen Draufsicht.

Bei dieser Ausführung ist das Schaufelgitter mit den Schaufeln 311-316 in Form von Clustern (311-313), (314-316) ausgebildet, an denen radial innen (wie in Fig. 2 unten) eine Verstimmeinrichtung in Form eines umlaufenden Ringes 300 angeordnet ist.

Dieser weist mit zweiten Schaufeln 312, 314, 316 jeweils eine zweite Passung und/oder Kontaktfläche und mit ersten Schaufeln 311, 313, 315 jeweils eine in Fig. 3 gestrichelt angedeutete und mit 310 bezeichnete erste Passung, die weiter als die zweite Passung ist, und/oder erste Kontaktfläche, die kleiner als die zweite Kontaktfläche ist, auf.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können.

### Bezugszeichenliste

- 11-16: Schaufel(gitter)
- 20: Ringscheibe
- 30: Plattform
- 40: Kavität
- 50: bewegliches Verstimmelement
- 111-116: Schaufel(gitter)
- 200: Ring
- 210: radiale Vertiefung
- 311-316: Schaufel(gitter)
- 300: Ring
- 310: weitere Passung/kleinere Kontaktfläche

## Patentansprüche

1. Turbomaschinenbaugruppe mit einem ringartigen Strömungsgitter, das mehrere Schaufeln (11-16; 111-116; 311-316) mit jeweils gleichen Eigenfrequenzen, nämlich mit gleichen Biege- und/oder Torsionseigenfrequenzen, aufweist, die in einer Umfangsrichtung verteilt angeordnet sind, und einer Verstimmeinrichtung (50; 200; 300) zur unterschiedlichen Verstimmung der jeweils gleichen Eigenfrequenzen der Schaufeln, **dadurch gekennzeichnet, dass** die Verstimmeinrichtung alle an den Schaufeln beweglich angeordnete Verstimmelemente (50), die in Umfangsrichtung in einer Reihe aufeinanderfolgen, aufweist und derart ausgebildet ist, dass erste Schaufeln (11-16; 13, 16) des Strömungsgitters im Betrieb jeweils höchstens ein, insbesondere kein, bewegliches Verstimmelement (50) der Verstimmeinrichtung kontaktieren, wobei zwischen wenigstens zwei aufeinanderfolgenden dieser ersten Schaufeln (13, 16) wenigstens eine zweite Schaufel (11, 12, 14, 15) des Schaufelgitters, an welcher wenigstens zwei der beweglichen Verstimmelemente angeordnet sind, angeordnet ist.

2. Turbomaschinenbaugruppe nach dem vorhergehenden Anspruch, **dadurch gekennzeichnet, dass** zwischen wenigstens zwei aufeinanderfolgenden dieser ersten Schaufeln (13, 16) höchstens zwei, insbesondere wenigstens zwei und/oder höchstens eine, zweite Schaufeln (11, 12, 14, 15) des Schaufelgitters angeordnet ist bzw. sind.

3. Turbomaschinenbaugruppe nach einem der vorhergehenden Ansprüche,
**dadurch gekennzeichnet, dass** wenigstens zwei, insbesondere alle, Schaufeln miteinander und/oder einer gemeinsamen Ringscheibe (20) integral ausgebildet oder stoffschlüssig verbunden sind oder die Schaufeln einzeln oder gruppenweise zerstörungsfrei lösbar an einer gemeinsamen Ringscheibe befestigt sind.

4. Turbomaschinenbaugruppe nach einem der vorhergehenden Ansprüche,
**dadurch gekennzeichnet, dass** die Schaufeln Lauf- oder Leitschaufeln und/oder die Verstimmeinrichtung radial innen an dem Strömungsgitter, insbesondere die beweglichen Verstimmelemente in Kavitäten von Plattformen benachbarter Schaufeln, angeordnet sind.

5. Turbomaschine, insbesondere Gasturbine, mit wenigstens einer Turbomaschinenbaugruppe nach einem der vorhergehenden Ansprüche.

6. Gasturbine, insbesondere Flugtriebwerk-Gasturbine, mit wenigstens einem Verdichter, der wenigstens eine Turbomaschinenbaugruppe nach einem der Ansprüche 1 bis 4 aufweist, und/oder wenigstens einer Turbine, die wenigstens eine Turbomaschinenbaugruppe nach einem der Ansprüche 1 bis 4 aufweist.

7. Verfahren zum Herstellen einer Turbomaschinenbaugruppe nach einem der Ansprüche 1 bis 4, wobei Eigenfrequenzen der Schaufeln durch die Verstimmeinrichtung unterschiedlich verstimmt werden und hierzu die beweglichen Verstimmelemente (50) in Umfangsrichtung unter wenigstens teilweiser Auslassung der ersten Schaufeln so verteilt werden, dass die ersten Schaufeln des Strömungsgitters im Betrieb jeweils höchstens ein, insbesondere kein, bewegliches Verstimmelement der Verstimmeinrichtung kontaktieren.

## Claims

1. Turbomachine assembly comprising a ring-like flow cascade, which has a plurality of blades (11-16; 111-116; 311-316) each having identical natural frequencies, specifically identical bending and/or torsional natural frequencies, which blades are distributed in a circumferential direction, and comprising a detuning device (50; 200; 300) for different detuning of the respective identical natural frequencies of the blades, **characterized in that** the detuning device comprises all detuning elements (50) which are movably arranged on the blades and are successive in a row in the circumferential direction, and is designed such that, during operation, first blades (11-16; 13, 16) of the flow cascade each contact at most one, in particular no movable detuning element (50) of the detuning device, at least one second blade (11, 12, 14, 15) of the blade cascade, on which at least two of the movable detuning elements are arranged, being arranged between at least two successive blades of these first blades (13, 16).

2. Turbomachine assembly according to the preceding claim,
**characterized in that** at most two, in particular at least two and/or at most one, second blades (11, 12, 14, 15) of the blade cascade is or are arranged between at least two successive blades of these first blades (13, 16).

3. Turbomachine assembly according to any of the preceding claims,
**characterized in that** at least two, in particular all, blades are integrally formed with or are integrally bonded to one another and/or a common annular disk (20), or the blades are non-destructively releasably fastened, individually or in groups, to a common annular disk.

4. Turbomachine assembly according to any of the preceding claims,
**characterized in that** the blades are rotor blades or guide vanes and/or the detuning device is arranged radially inwardly on the flow cascade, in particular the movable detuning elements are arranged in cavities of platforms of adjacent blades.

5. Turbomachine, in particular a gas turbine, comprising at least one turbomachine assembly according to any of the preceding claims.

6. Gas turbine, in particular an aircraft engine gas turbine, comprising at least one compressor having at least one turbomachine assembly according to any of claims 1 to 4, and/or at least one turbine having at least one turbomachine assembly according to any of claims 1 to 4.

7. Method for producing a turbomachine assembly according to any of claims 1 to 4, wherein natural frequencies of the blades are differently detuned by the detuning device and for this purpose the movable detuning elements (50) are distributed in the circumferential direction with at least partial omission of the first blades such that, during operation, the first blades of the flow cascade each contact at most one, in particular no movable detuning element of the detuning device.

## Revendications

1. Module de turbomachine comportant une grille d'écoulement annulaire qui présente plusieurs aubes (11-16 ; 111-116 ; 311-316) comportant respectivement des fréquences propres identiques, à savoir comportant des fréquences propres de flexion et/ou de torsion identiques, lesquelles aubes sont disposées de manière répartie dans une direction périphérique, et un dispositif de désaccord (50 ; 200 ; 300) permettant de désaccorder différemment les fréquences propres respectivement identiques des aubes, **caractérisé en ce que** le dispositif de désaccord présente tous les éléments de désaccord (50) disposés de manière mobile au niveau des aubes et se succédant en une rangée dans la direction périphérique et est réalisé de telle sorte que des premières aubes (11-16 ; 13, 16) de la grille d'écoulement viennent en contact avec respectivement au plus un, en particulier aucun, élément de désaccord (50) mobile du dispositif de désaccord lors du fonctionnement, au moins une seconde aube (11, 12, 14, 15) de la grille d'aubes, au niveau de laquelle au moins deux des éléments de désaccord mobiles sont disposés, étant disposée entre au moins deux aubes successives parmi lesdites premières aubes (13, 16).

2. Module de turbomachine selon la revendication précédente,
**caractérisé en ce qu'**au plus deux, en particulier au moins deux et/ou au plus une, secondes aubes (11, 12, 14, 15) de la grille d'aubes sont disposées entre au moins deux aubes successives parmi lesdites premières aubes (13, 16).

3. Module de turbomachine selon l'une des revendications précédentes,
**caractérisé en ce qu'**au moins deux aubes, en particulier toutes les aubes, sont réalisées d'un seul tenant les unes avec les autres et/ou avec un disque annulaire commun (20) ou sont reliées par liaison de matière, ou les aubes sont fixées individuellement ou par groupes à un disque annulaire commun de manière amovible et de façon non destructive.

4. Module de turbomachine selon l'une des revendications précédentes,
**caractérisé en ce que** les aubes sont des aubes mobiles ou directrices et/ou le dispositif de désaccord est disposé radialement à l'intérieur au niveau de la grille d'écoulement, en particulier les éléments de désaccord mobiles sont disposés dans des cavités de plateformes d'aubes adjacentes.

5. Turbomachine, en particulier turbine à gaz, comportant au moins un module de turbomachine selon l'une des revendications précédentes.

6. Turbine à gaz, en particulier turbine à gaz de moteur d'aéronef, comportant au moins un compresseur qui présente au moins un module de turbomachine selon l'une des revendications 1 à 4, et/ou au moins une turbine qui présente au moins un module de turbomachine selon l'une des revendications 1 à 4.

7. Procédé permettant de produire un module de turbomachine selon l'une des revendications 1 à 4, des fréquences propres des aubes étant désaccordées différemment au moyen du dispositif de désaccord et à cet effet, les éléments de désaccord (50) mobiles étant répartis dans la direction périphérique en excluant au moins partiellement les premières aubes, de telle sorte que les premières aubes de la grille d'écoulement viennent en contact avec respectivement au plus un, en particulier aucun, élément de désaccord mobile du dispositif de désaccord lors du fonctionnement.
